# EUROPEAN PATENT APPLICATION

(11) **EP 1 371 706 A1**
(43) Date of publication of application: **17.12.2003**
(21) Application number: 02711405.7
(22) Date of filing: 08.02.2002
(51) Int. Cl.: C09K 3/00, C04B 28/04, C04B 28/06, C04B 22/08, C08G 18/00, B01F 1/00

(54) **INORGANIC DISSOLUTION ACCELERATOR MAKING METAL OR INORGANIC SUBSTANCE WATER-SOLUBLE**

(30) Priority: 08.02.2001 JP 2001032671
(71) Applicant: Kokuta, Hiroshi, Chigasaki-shi, Kanagawa 253-0004 (JP)
(72) Inventor: KOKUTA, Hiroshi, Chigasaki-shi, Kanagawa 253-0004 (JP); KOKUTA, Katsuhiro, Chigasaki-shi, Kanagawa 253-0004 (JP); UCHIDA, Hideaki, Sagamihara-shi, Kanagawa 229-1124 (JP); KOKUTA, Kenji, Chigasaki-shi, Kanagawa 253-0001 (JP); KOKUTA, Naoto, Himeji-shi, Hyogo 672-8089 (JP)
(74) Representative: Albrecht, Thomas, Dr.
(86) International application number: JP0201072
(87) International publication number: WO02062916

(57) **Abstract**

The invention provides an inorganic dissolution accelerator used for obtaining a water-soluble inorganic compound(s), high in concentration and containing a large solid content, which accelerator is prepared by making one or more compounds selected from fluorides, mineral acids, mineral "ous" acids and salts thereof, and boric acid compounds, all either natural or synthetic, coexist with an alkali metal and/or substance containing an alkaline metal, and is able to transform metals and inorganic substances present in water, either natural or synthetic, containing as the main component silicon Si, aluminumAl, and/or boron B, into amorphous highly water-soluble inorganic compounds having the solubilities equal to, or larger than those well known in the art.

## Description

### Technical Field

The present invention relates to an inorganic dissolution accelerator which makes metals and inorganic substances water-soluble, the powder thereof and a production method of the powder, and relates to amorphous highly water-soluble inorganic compounds (amorphous water-soluble inorganic compound enabled to dissolve in water in a high concentration), amorphous highly water-soluble inorganic compounds to be transformed into water-resistant hardened substances, inorganic molded precursors noncombustible inorganic foams and rapid heat cure compositions, all based on the above mentioned inorganic dissolution accelerators and powders thereof; and more specifically, the present invention relates to a dissolution accelerator that makes the metals or inorganic substances, present in water and containing silicon Si, aluminum Al or boron B as the major component, dissolve in the water of a concentration not lower than the solubility well known in the art. When amorphous highly water-soluble inorganic compounds of metals and inorganic substances are realized and are further converted into the water-resistant hardened substances, then solvent-free inorganic foams that can be used as coating compositions, molded materials and heat insulating materials are obtained, and for these compositions and materials, various types of applications including building materials and the like are expected.

### Background Art

The petrochemical products are convenient when being used, but produce the exhaust gas pollution when burnt, and give rise to the environmental hormones. Accordingly, at present, the inorganic products are demanded which can substitute for the petrochemical products, reduced to nature when dumped and/or disposed of, and pollution-free even when burnt and/or dumped. The pollution-free inorganic substances that can substitute for synthetic resins should be solvent-free inorganic polymers; the inorganic polymers become possible in the form of highly water-soluble inorganic compounds, but there have been no methods for making metals and inorganic substances take the forms of solvent-free aqueous high concentration solutions. It has been difficult that metals and inorganic substances, which are insoluble or hardly soluble in water, are made to be water-soluble in high concentrations. When the research and development is considered for searching for inorganic polymers, it has been necessary to convert crystalline materials into amorphous materials to obtain high concentration aqueous solution thereof.

The present inventors have disclosed that the anhydrite (CaSO₄) calcined with added fluorides or boric acid based compounds acts to accelerate the elution of Ca or SO₃ at normal temperatures and, when heated, acts to accelerate remarkably the elution of the alumina component even if the gypsum component is in a supersaturated condition, and accordingly acts to make the cement be quickly hardened like thermosetting resins, in U. S. A. Patent No. 3,664,854, U. S. A. Patent No. 3,915,724, Japanese Patent Publication No. 57-022907, "Cement Admixture Composed of Special Anhydrite," and Japanese Patent Publication No. 59-032416, "Heat Hydraulic Bonding Material and Molding Method Thereof." Additionally, the present inventors have proposed that silanol salts, fluid even in high concentrations, are generated; but sodium silicate is not produced by the interfacial reaction in water between the solid metal and high concentration alkali metal with the coexisting compounds of boric acid and hydrofluoric acid, in Japanese Patent Publication No. 7-14801, "Aqueous Film-Forming Inorganic Compound and Method for Producing the Same."

In addition to the above, in Japanese Patent Laid-Open No. 8-73212, "High Concentration Boric Acid Compound and Composition for Fireproofing/Fire Resisting Use Containing the Same and Binding Material and Fireproof/Fire-Resistant Material Using the same," the present inventors have disclosed the finding that even such boric acid compounds that are low in water solubility can be high concentration boric acid compounds exceeding by far the solubility of 4 wt% well known in the art, when warmed by blending and with the coexistence of mineral acids or mineral "ous" acids or salts thereof.

The above described fluorides, mineral acids or mineral "ous" acids or salts thereof and/or boric acid compounds, which are all reaction aids, require the concomitant use of chelating agents such as citric acid and other carboxylic acids for the purpose of accelerating the dissolution of cement components, and require the concomitant use of chelating agents and surfactants for the purpose of accelerating the dissolution of boric acid compounds. Additionally, for production of the aqueous film-forming inorganic compounds, the above described reaction aids have been assumed to be the catalytic reaction aid for the interfacial reaction with the solidmetal in which the high concentration alkali solution in a supersaturated condition compensates the fraction of the alkali component consumed by the chemical reaction, according to the theory of solubility product, in the lower part of the reaction vessel. Accordingly, the reaction proceeds under the condition of the autoconvection generated under the still-standing reaction without stirring, and is thereby under the condition of no forced stirring for mixing.

As for the production conditions, the intended rise of the blending ratio utilizes the increased amount of alkali metal, resulting in a strongly alkaline product. Thus, it has been required to establish a method that increases the yield, and moreover, raises the Si/Na ratio for actualizing the water resistance.

For the purpose of transforming metals and inorganic substances into high concentration aqueous solutions, it is necessary to transform crystalline materials into amorphous materials. Such metals and inorganic substances that can be easily converted, in the amorphous state, into high concentration solutions include silicon Si, aluminum Al, borax, and boric acid. In order to dissolve these substances, chemical dissolution accelerators, and physical dissolution accelerating methods of warming, forced stirring and mixing, and the like have been required. Modern mass production methods adopt forced operations such as physical contact and stirring and the way of accelerating reactions by heating; in order to accelerate the dissolution rate, the above described physical dissolution accelerating methods are needed to be used in combination with other methods, but the dissolution acceleration has been difficult when based only on the chemical reaction conditions and when agglomerate raw materials such as metallic silicon are used.

Additionally, the dissolution accelerator should not be left as the undissolved residue, but should be a reactant component that forms the compound.

The production of the above described aqueous film-forming inorganic compound is based on the reaction in which the reactant base materials are allowed to stand still and the reaction is commended to the autoconvection, and hence the film formation tends to occur on the surface of the water; accordingly the evaporation of the bulk water is prevented and thereby the concentration increase rate is slow so that it takes long time to reach a high concentration and it has been necessary to adopt an additional concentration method.

As for the production of the above described water-soluble film-forming inorganic compound, a method has been proposed in which alcohols and a mineral acid are added, and then the alcohols are removed to increase the solid content; however, when the pH is made to be 12 or lower and the above described alcohols are added, the yield is poor, while when the pH is made low from the beginning, precipitate is generated when stored, and hence it has been impossible to obtain a compound containing 60% or more solid content by adjusting without restraint the pH to an arbitrary low value.

An object of the present invention is to obtain a water-soluble inorganic compound that is high in concentration and large in the solid content contained therein. Even when adopting a method in which alcohols with acids added are used for treatment and the yield of the residual solid content is thereby increased, a low starting concentration naturally results in a low yield. In other words, unless the starting concentration of the aqueous inorganic solution among others is made high, no products have been able to be obtained in high yields which are high in concentration and large in the contained solid content. With the pH values of 11.5 or lower, although transparent solutions are able to be formed which are 30% or more in the concentration of the solid content, precipitation occurs when stored, and there is a trend toward ending up with the decreased concentrations of the solid content in the aqueous solution.

To an alkaline metal, one or more compounds, selected from the group consisting of fluorides, mineral acids and mineral "ous" acids and the salts thereof, and boric acid compounds, are added to make an inorganic dissolution accelerator; then the inorganic dissolution accelerator is added as dissolution accelerator to an aqueous solution which is charged with a metal or an inorganic compound, insoluble or hardly soluble in water, and is warmed to 40°C or above; and in this way, it has been possible that a metal or an inorganic substance, either natural or synthetic and either insoluble or hardly soluble in water, is transformed into an amorphous highly water-soluble inorganic compound having a solubility not smaller than that well known in the art. By making the concentration further higher or by increasing the concentration of the metal component, the hardened substance formed by heating can also be made insoluble in water. The amorphous highly water-soluble inorganic compounds form inorganic polymers with film forming property, and thus when heated, boil with foam to become plastic film, with the contained water acting as forming agent; thus, solvent-free noncombustible inorganic foam precursors and heat insulating materials have been able to be commercialized.

Additionally, the present invention has achieved a highly water-soluble inorganic compound on the basis of the attempted physical treatments including heating, stirring and/or mixing and using an inorganic dissolution accelerator, but neither by using the sol-gel method nor by using surfactants and catalysts. Water-soluble materials have such a property of redissolution in water even after having been hardened, but the water-soluble inorganic compounds, despite of being water-soluble, are needed to be made insoluble by hardening. If solvent-free inorganic polymers could be commercialized, the resources could be made recyclable resources that are reducible to the nature in a pollution-free manner. Besides, if inorganic heat insulating materials can be produced, both energy saving and resource saving can be achieved in a combined manner.

Conventional inorganic aqueous solutions have a drawback that dehydration and hardening operation thereof is accompanied by water reabsorption. Only when a high concentration inorganic aqueous solution exhibits water resistance when hardened, although it is aqueous, the practicability is imparted thereto.

According to the prior art, it has been necessary to use chelating agents, and various surfactants are concomitantly used for dissolution acceleration.

An examination of the hitherto developed achievements indicates that an alkaline metal such as Na or Ca is always needed as a reactant component when a metal or an inorganic compound is dissolved, irrespective as to whether or not chelating agents and surfactants are used. It is well known in the art that borax, as represented as Na₂B₄O₇-xH₂O, contains an alkali metal, and some natural mineral borax from Turkey contains alkaline earth metals (Ca, Mg). As disclosed in the above described Japanese Patent Publication No. 7-14801, it has been found that borax does not dissolve in water by nature in a concentration of about 4 g/100 g water or more at an ambient temperature, and dissolves in a concentration of about 8 g/100 g water even at 100°C, but borax can dissolve in warm water in the presence of an alkali metal without producing any undissolved matter.

In the reaction described in the above described Japanese Patent Publication No. 7-14801, the presence of metallic silicon Si and metallic aluminum Al is the necessary condition; however, the borax is not precipitated as the insoluble pentahydrate but a transparent solution can be obtained when the metallic silicon is removed, no surfactants are added to the water, borax, sodium fluoride and caustic soda are added, and then heating is made. Even when a salt of a mineral "ous" acid such as sodium sulfite, sodium nitrite or sodium phosphite is used in place of sodium fluoride (commercially available industrial salts of 98% or above in purity are used), heating results in complete dissolution and a transparent solution can also be obtained.

Replacement of caustic soda with caustic potash or lithium hydroxide leads to similar dissolution. Borax, sodium fluoride and caustic soda act as dissolution accelerators for metallic silicon.

The reaction conditions in the above described Japanese Patent Publication No. 7-1801, in which the quantities of water, metallic silicon, aluminum, and alkali metals are made constant and the quantity of sodium fluoride is increased, result in an increase of the specific gravity as observed after a certain elapsed time.

The metallic silicon used is a 99% pure Chinese-made product, and the aluminum used is a commercially available 99% pure aluminum wire. There is no particular limitation for the purity, but it is advisable to use highly pure products because otherwise the impurities contained remain as residuals.

In the preceding reaction, the solid content is increased, but the pH value becomes high when the quantities of water, metallic silicon and sodium fluoride are maintained constant, and the quantity of caustic soda is increased. Thus, a method comes to be required which gives rise to a high yield and yields a low pH product.

Under the preceding reaction conditions, the specific gravity yields vary in the order of sodium sulfite >sodium nitrite > sodium fluoride > borax >sodium phosphite when the quantities of water, metallic silicon and caustic soda are maintained constant, a certain amount of sodium fluoride and sodium sulfite, sodium phosphite, sodium nitrite or borax is added; and the specific gravities are measured after a certain elapsed time.

In the above described reaction, the reaction is conducted under the conditions that warming is made under the bottom of the vessel and stirring is made, but still-standing interface reaction between metallic silicon solid and a highly concentrated solution of alkali metal is not conducted on the bottom of the reaction vessel under the conditions that sodium fluoride, borax or a salt of a mineral "ous" acid are added.

The reaction vessel is filled with water, and sodium fluoride is put in the water under stirring without dissolution, but addition of anhydrous borax and boric acid, under the conditions that the solution is maintained alkaline and heating under stirring is made, leads to an apparently transparent solution. If the preceding sodium fluoride or mineral "ous" acids are absent, residual undissolved matter, dispersed and suspended, can be visually observed even under heating and stirring.

In the preceding test, the produced solution is weakly alkaline, and addition of 86% phosphoric acid converts the solution to a weakly acidic solution which can maintain transparent dissolution condition over a long period of time.

In the above described reaction, a transparent aqueous solution can be obtained, even when sulfurous acid, nitrous acid, phosphorous acid, and the salt thereof are used in place of sodium fluoride, and even when sulfuric acid, nitric acid and hydrochloric acid (all being of the commercially available industrial grade) in place of phosphoric acid.

The object of the present invention is to create a highly water-soluble inorganic compound.

### Disclosure of the Invention

In claim 1 of the present invention, one or more compounds selected from fluorides, mineral acids, mineral "ous" acids and salts thereof, and boric acid compounds, all either natural or synthetic, are made to coexist with an alkali metal and substances containing alkaline metals, and an inorganic dissolution accelerator is thereby prepared; and the use of the inorganic dissolution accelerator makes it possible that metals and inorganic substances present in water, either natural or synthetic, containing as the main component metallic silicon Si, metallic aluminum Al, or boron B, are transformed into amorphous highly water-soluble inorganic compounds having a high concentration not lower than the solubility well known in the art.

Claim 2 of the present invention claims the amorphous highly water-soluble inorganic compound according to claim 1, which is synthesized by using the dissolution accelerator of claim 1 and by warming to 40°C or above for dissolution acceleration, so that the metal or inorganic substance in the preceding claim, either natural or synthetic, is made to have a concentration not lower than the solubility well known in the art.

Claim 3 of the present invention claims the amorphous highly water-soluble inorganic compound according to claims 1 and 2 to be transformed into a water resistant hardened substance when heated, which is produced as follows: the highly water-soluble inorganic compound of claims 1 and 2, with the pH value of 12 or above, is mixed with alcohols containing an added mineral acid, then the contained water and the alcohols are removed, the pH is made to be 11.5 or lower, and either the solid content is made to have a high concentration of 50% or higher or cyanuric acid or melamine isocyanurate is added.

Claim 4 of the present invention claims the amorphous highly water-soluble inorganic compound according to claims 1 to 3 to generate a water-resistant hardened substance when heated, which is produced as follows: the amorphous highly water-soluble inorganic compound of claims 1 to 3, in which the main component of the metallic component is Si or Al, is adjusted so as to have the metallic component 2.5 times or more higher in molar ratio than the alkali metal component by further adding an amorphous component containing metals.

Claim 5 of the present invention claims a solvent-free inorganic foam according to claims 2 to 4, which is produced as follows: the amorphous highly water-soluble inorganic compound of claims 2 to 4 is exposed to an arbitrarily selected temperature between 100°C and 900°C to be heated for a certain period of time, thereby dehydrated by evaporation resulting in boiling with foam, and thus transformed into a plasticized film-forming substance which is further formed into a film to have a pressure resistance strength under evaporation.

Claim 6 of the present invention claims an inorganic molding precursor according to claim 5, which is made sheet like or granular by air drying or heating the amorphous highly water-soluble inorganic compound of claim 5 so as to make the water content fall within 30%, and is to be boiled with foam, to be plasticized to form film and to form a solvent-free inorganic foam when heated.

Claim 7 of the present invention claims the amorphous high concentration inorganic water-soluble compound according to claims 1 to 3, which is produced by adjusting, within 4 to 9 without restraint, the pH of the highly water-soluble inorganic compound of claims 1 to 3, produced by adding a dissolution accelerator and in which the main component of the metallic component is a B compound.

Claim 8 of the present invention claims a rapid heat cure composition which is produced by adding the inorganic dissolution accelerator of claim 1 to portland cement or alumina cement.

Claim 9 of the present invention claims a powder of the amorphous highly water-soluble inorganic compound of claims 1 and 2 which is produced by warming the above described inorganic compound to 300°C or above and is dehydrated by heating through spraying with a nozzle warmed so as to make the temperature at the target be 150 to 300°C, or a powder which is produced by heating to 150 to 300°C and thereby dehydrating the above described amorphous highly water-soluble inorganic compound, followed by pulverizing .

Claim 10 of the present invention claims a fire-retardant organoinorganic composite foam and a production method thereof, which foam is produced by adding, in 20 wt% or more, the amorphous highly water-soluble inorganic compound of claims 1 and 2 to a polyol compound as the main component of urethane, together with a deoxidizing fire retardant, and furthermore by adding a curing agent to be highly foamed, and is characterized by the cushion property thereof.

Claim 11 of the present invention claims a fire-retardant organoinorganic composite foam and a production method thereof, which foam is produced by adding, in 100 wt% or more relative to the sum amount of the main component of urethane and the curing agent, the powder of the amorphous highly water-soluble inorganic compound of claims 1 and 2, containing the boron B component as the main component, and water or the above described highly water-soluble inorganic compound containing the 40% or more solid content, and which foam is equal to or larger in foam volume than the used urethane components.

As described above, the present invention has made it possible to transform insoluble metals and inorganic substances into water-soluble compounds in high concentrations. The fact that crystalline inorganic substances acquire water solubility indicates that the crystalline substances are transformed into amorphous substances, and there has been confirmed a phenomenon that heating to accelerate the reaction results in film formation. According to the conventional methods, a phenomenon occurs in which a film is formed on the surface of the water in the reaction vessel, thus preventing evaporation of the aqueous solution and adversely affecting the productivity in the process for attaining high concentrations. In order to overcome this problem, steadily stirring is necessary to be conducted in the production process. The use of the dissolution accelerator of the present invention makes it possible to prevent the surface film formation and to attain high concentrations by heating under stirring.

Even when the solid content (the residual amount by weight obtained from 5 g heated at 105°C for 3 hours with an electric furnace) of the produced inorganic water-soluble compound amounts to 30%, dehydration occurs on addition of alcohol and the component corresponding to the solid content of 45% is esterified to remain; accordingly, aqueous alcohol containing excessive water is removed and a highly water-soluble compound is obtained which has a high molecular weight. The alcohols able to be used include various alcohols with various C number falling in the range from monohydric to polyhyric alcohols such as methyl alcohol and glycerin.

When the amount of the alkali metal as the reaction component is increased, the reaction yield can be increased, but the pH of the product becomes high. In this connection, instead of the use of an acidic substance to be simply added to the product for the adjustment, the use of an alcohol mixed with an acid does not destroy the reaction composition and leads to a product that is low in pH and high in concentration.

The amount of the acid added to the alcohol is recommended to be less than 10% by weight, because the mixing with the weight ratio of 15% provides so strong an acid as to destroy the water-soluble inorganic compound when mixed therewith. Additionally, an appropriate mixing amount of the above described water-soluble inorganic compound is within three times by weight the amount of the alcohol-acid mixture.

Amorphous SiO₂ is solubilized in an alkaline substance such as caustic soda. Calcined feldspars, zeolite and diatomite can be regarded as amorphous silica, and among others the substances containing amorphous silica such as pozzolan and glass can also be used. The above described dissolution accelerator of the present invention contains alkali metals as constituent, and is transformed, on addition of amorphous silica, into Na₂SiO₃ when heated, and hence into a silica supersaturated substance in which the ratio, SiO₂:Na₂O, of the high concentration aqueous inorganic compound becomes 3 or more, and accordingly transformed into an insoluble hardened substance. Silica sol becomes gel immediately after mixing, but amorphous silica does not coagulate by mixing, thus giving a period of working life, and is involved in a reaction when warmed so that it has characteristics of a hardening agent. If the metallic component is aluminum, calcined clay and bauxite display similar effects. More specifically, it has become possible that when amorphous silica or alumina is added to the high concentration aqueous inorganic compound, the obtained mixture is not hardened at normal temperature, but is hardened when heated and forms a water-resistant hardened substance.

The effects of the measures for overcoming the problems of the present invention were confirmed on the basis of the following methods.

### (Method <1>)

(Step 1) A stainless steel vessel was placed on a gas stove and was charged with 600 cc of water.
(Step 2) The water of the vessel was added with 150 g of borax decahydrate (99% pure) manufactured by BORAX, Inc., USA, and stirred, but the borax was not dissolved, and heating yielded an apparently transparent solution. A drop of the solution was placed on a slide glass and cooled, and then brilliant crystalline appearance came back.
(Step 3) The above described solution, in a heated condition, was added with 10 g of sodium fluoride (Hashimoto Kasei Co., 99 pure) and stirring yielded a transparent solution. A drop of the solution was placed on a slide glass and cooled, and then crystalline substance like the above was found to remain.
(Step 4) Heating was continued, 10 g of caustic soda manufactured by Asahi Glass Co. (99% pure) was put in and mixed. A drop of the transparent solution was placed on a slide glass and cooled, and then the crystalline substance was not found, but transformation into an amorphous substance was found.
(Step 5) Successively 120 g of boric acid (manufactured by BORAX, Inc., 99% pure) was put in and mixed under stirring. A drop of the transparent solution was placed on a slide glass and cooled, and then a transparent coating film was obtained.

The pH thereof was 8.5. Without using either a chelating agent or a surfactant, the solubility of crystalline boric acid/borax became 270 g/600 g of water = 45% in contrast to that well known in the art of about 5 g/100 g of water.

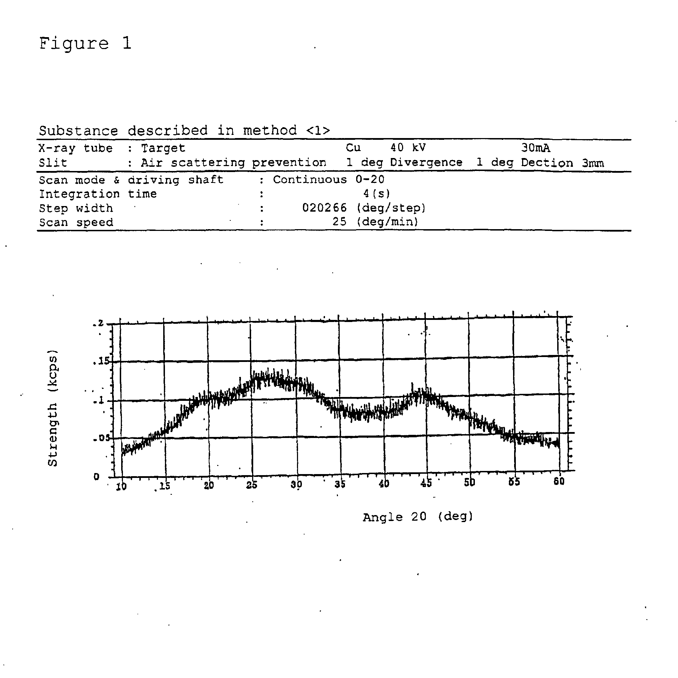

Figure 1 shows an X-ray analysis chart for the high concentration aqueous inorganic compound according to the above described method <1>. The chart is broad and shows no crystal peaks, indicating that the sample was amorphous. The measurement was made by Shimadzu Techno-Research Inc.

The measure for overcoming the problem of the present invention has been found to overcome the problem, without adding either a chelating agent or a surfactant to crystalline borax/boric acid, but using alkali metals, and sodium fluoride, mineral acids, mineral "ous" acids or salts thereof for inorganic dissolution accelerators provided by the inventors.

Additionally, it has been found that the use of alkali metals (Na, K, Li) that are strong alkali and the addition of acidic substances (boric acid, hydrochloric acid, sulfuric acid, nitric acid, phosphoric acid) do not lead to coagulation, and the pH is adjustable.

### (Method <2>)

An industrial ethyl alcohol added with hydrochloric acid, sulfuric acid, nitric acid and phosphoric acid in 1 to 2 wt% was prepared, the aqueous inorganic compound solution prepared according to the above described method, of pH 12.4 and a specific gravity 1.42, was added to the ethyl alcohol, and the bleeding containing alcohol was removed; then the pH became 11 or lower and the yield was obtained which reached 70 to 90 wt% of the put in amount of the above described aqueous inorganic compound although some water content was included. In a previous invention, flexibility was lost when the pH was made to be 11 or lower, but the product of the present invention was transformed into a flexible material when warmed to 70°C or lower.

Diatomite was calcined at 1, 000°C, and cooled to prepare amorphous SiO₂, which was mixed in the ratio of 10 wt% according to either the above described method <1> or <2>, resulting in no coagulation. The solution was transferred into a paper cup and heated for 3 minutes in a 500 W microwave oven to yield a hardened substance. Water was poured into the cup to the level above the interface and observation was made; however, neither softening nor collapse was found in three days and thus attaining the water resistance.

A piece of copy paper was dipped into the aqueous inorganic compound based on the above described method <1>, taken out and dried. The piece of copy paper was not discolored because the solution was neutral, had a flat and smooth surface, had absolutely no powder on the surface, had flexibility, and moreover, was carbonized but not burnt with flame when ignited. Thus, it was possible to confirm that the aqueous inorganic compound is a fireproofing agent without discoloration:

### (Method <3>)

A stainless steel vessel was charged with 600 kg of water warmed to 40°C a cage containing 97% pure metallic silicon of 10 mm or less in grain size was put in, and then a mixture of 15 kg of caustic soda and 10 kg of borax mixed with 5 kg of sodium fluoride was put in. The reaction occurred more rapidly and vigorously than that at normal temperature, yielding an amorphous highly water- soluble inorganic compound of 12.6 in pH and 1.47 in specific gravity. In 100 g of the compound, 2 to 30 g of the above described soluble silica and glass were mixed; the mixture was placed in a crucible and heated to a temperature between 300°C and 1,000°C in an electric furnace, yielding various types of foams of 0.07 to 0.3 in specific gravity. Among thee trial products, water resistance was found to be generated when the content of the above described mixture was made to be 3 g or more and heating was made at a temperature of 300°C or above.

The phenomenon that is observed when the amorphous water-soluble inorganic compound of the present invention is heated to be dehydrated and become viscous and to boil with foam is absolutely similar to the phenomenon observed in caramelizing sugar in which sugar, an organic polymer, is melted in hot water, is heated to be dehydrated, become viscous and boil with foam, is then added with sodium bicarbonate and allowed to stand with heating stopped to yield a sugar cake plasticized with a surface film formed and increased in volume, and left to be cooled so as to be solidified with foam. In the present invention water is gasified to work as a foaming agent.

When the present invented product was either observed on a high temperature microscope or subjected to the FTTR analysis, the exhibited phenomenon was similar to the above described; around 600°C the peak of opal was confirmed, ensuring the phenomenon.

To 10 cc of industrial ethanol, 2 g of hydrochloric acid (38%) was added, and then 25 g of the amorphous highly water-soluble inorganic compound according to the above described method <3> was added and mixed; thus, the pH was decreased to 10. 8 and the plasticity was lost, but when warmed, plasticity was generated so as to form a substance as soft as boiled rice cake; 10 g of the substance was put in a paper cup and heated in a 500 W microwave oven for 3 minutes to yield a foam of 0.15 in specific gravity.

It has been found that even when the plasticity is lost owing to the pH decreased to 11 or lower by adding alcohol containing acid, reheating at low temperatures can yield a product provided with plasticity. Accordingly, sheets of molded precursors, SMC and foam precursors can be manufactured, and can be cut to be granulated, yielding foam precursor granules.

Either the strongly alkaline product of pH 12.6 of the above described method <3> or the preceding acid-alcohol treated product of pH around 11 can be kneaded with cyanuric acid and melamine isocyanurate in 1 to 20 wt%. Consequently, it has been found that the stretchability is increased to a magnitude comparable to those of caulking materials at an ambient temperature, and when dried, a tensile strength similar to that of rubber is generated. When heated, plasticity is generated, yielding a foam provided with a certain strength. When heat-resistant fibers are dispersed, high strength FRC is obtained.

The above described conventional techniques based on the use of surfactants and chelating agents can hardly stabilize the colloid solutions of the amorphous highly water-soluble inorganic compounds that utilize boric acid and borax as raw materials; as has been previously observed at low temperatures, there occurs such a phenomenon that no colloid balance tends to be established and hence precipitation occurs, but the use of the inorganic dissolution accelerator of the present invention permits the production of stable alkaline solutions, and addition of mineral acids to these solutions allows the production of stable solutions in which the pH values are easily adjusted without restraint from the alkaline region to the acidic region.

### Brief Description of the Drawings

Figure 1 shows the X-ray analysis chart for a highly water-soluble inorganic compound based on a method <1>.
Figure 2 shows the X-ray analysis chart for a product of Example A in Example 8.
Figure 3 shows a graph representing the relation between the heating temperature and the amounts of the eluted components in a calcined anhydrous gypsum CaSO₄ doped with CaF₂ in 1 %.

### Best Mode for Carrying Out the Invention

Description will be made below to demonstrate the operation and effects of the present invention on the basis of the following Examples.

### (Example 1)

The following experiment was performed under the condition that the amount of the inorganic dissolution aid of the present invention was set at 10 g for each run, which was dispersed in 100 cc of water to prepare a 10% solution of an inorganic dissolution accelerator; representative examples of the components included the following [sodium fluoride: caustic soda] ratio sets: [1:9] in Case A, [5:5] in Case B, and [8:2] in Case C.

The 10 % solution of the inorganic dissolution aid A (30 g, pH 13) was warmed to 40°C, the amount of boric acid was increased in the order of 3 g, 6 g (3+3), 9 g (6+3), and then the solution was transparent in any case, and the solubility reached 9/30 = 30%; when further increased to 12 g (9+3 ) and warmed to 70°C and then increased to 15 g, the pH became 6.6 and a transparent solution was obtained. The solubility of boric acid was found to be 15/30 = 50%. In contrast to the case of boric acid, the added amounts of sodium fluoride and caustic soda were respectively only 0.006 to 0.0533wt% and 0.06 to 0.0133wt%. The amount of the inorganic dissolution accelerator was 20 to 100% in relation to the amount of boric acid.

### (Example 2)

Cut pieces of copy paper were dipped in all the Case solutions, and taken out and allowed to be dried in the atmosphere; any piece of paper maintained flexibility, had a flat and smooth surface, and was only carbonized without flush over with flame when ignited.

### (Example 3)

The 10 % solution of the inorganic dissolution aid of Case C (30 g, pH 12.5) was mixed with 3 g of boric acid and heated to 60% as described above. The solution became transparent and the pH thereof was 8.5. Further, 3 g of boric acid (6 g in total) was mixed and then the pH became 5.4 and the solution became transparent. Further mixing of boric acid will decrease the pH down to 4 and the adjustment will be possible.

### (Example 4)

The 10 % solution of the inorganic dissolution aid B (30 g, pH 13 .5), described in the above Example 1, was warmed to 70°C, and the addition amount of anhydrous borax (obtained from Soviet Union, 99% pure) was increased in the order of 3 g, 6 g, 9 g, and the solution was transparent at every step of increase. The final pH was 13.5.

### (Example 5)

To the 10 % solution of the inorganic dissolution aid B in the preceding Example, warmed to 40°C, the boric acid used in the preceding Example was added in the increasing order of 3 g, 6 g, 9 g, 12 g, and a transparent solution was obtained. The final pH was 6.2 and the final solubility was 40%.

### (Example 6)

A stainless steel vessel was charged with 1,000 cc of water, 300 g of granular metallic silicon of 5 to 25 mm in grain size was put in the vessel, and additionally, 75 g of sodium fluoride and 100 g of caustic soda were added as dissolution accelerators. Warming at 40°C was continued, but the reaction heat exceeded 90°C. Under stirring, the elapsed time of 2 hours led to a specific gravity of 1.45 and a transparent solution, the pH being 13. The solid content weight of the hydrate was 450 g, while the amount of the dissolution accelerator was 175 g, and subtraction of 10% of the hydrated water reveals that about 220 g of the metallic silicon was dissolved.

### (Example 7)

To 30 g of industrial ethanol, 96% sulfuric acid, 38% nitric acid and 35% hydrochloric acid each was added in 2 wt% and mixed to prepare an alcohol solution. To this solution, 100 g of the water-soluble inorganic compound of the preceding Example 6 was added and mixed gently. The bleeding mixed with alcohol was removed and about 70 to 80 g of a viscous substance was obtained.

The pH was 10.6 to 11. When the mineral acids each was mixed in 1 wt% in the above described Example, the pH of the residual substance was around 11.5.

### (Example 8)

To 1,000 cc of water, a metal (metal silicon, 97% pure) and an inorganic substance (borax decahydrate, 98%pure) were added in sum total of 500 g, and the inorganic dissolution accelerator (sodium fluoride + caustic soda) was added in varying mixing ratio, the solution was maintained at 40°C or above and stirred and heated for one hour, and then cooled; the resulting specific gravities are shown below.

**Table 1**

| | caseA | caseB | caseC | caseD | caseF |
|---|---|---|---|---|---|
| Metal, metal silicon | 400g | 400g | 400g | 400g | 400g |
| Inorganic substance, borax decahydrate | 50g | 50g | 70g | 100g | 0 |
| Inorganic dissolution accelerator | 75g | 120g | 140g | 170g | 280g |
| Sodium fluoride | 25g | 70g | 70g | 70g | 180g (Sodium nitrite) |
| Caustic soda | 50g | 50g | 70g | 100g | 100g |
| Water | 1500g | 1500g | 1500g | 1500g | 1500g |
| pH/20°C | 11.5 | 11.2 | 11.07 | 11.5 | 10.8 |
| Specific gravity | 1.27 | 1.46 | 1.64 | 1.84 | 1.48 |
| Collected solid content | 270g | 464g | 640g | 940g | 480g |

Results:
a. Increase of the inorganic dissolution accelerator increases the collected amount of the solid content: Cases A to D.
b. Increase at the sodium fluoride ratio increases the collected amount of the solid content: Cases B to D.
c. Increase of the caustic soda ratio leads to increase in the collected amount of the solid content: Cases C and D.
d. Increase of the inorganic substance solubility leads to increase in the collected amount of the solid content: Case D.
e. When the amount of the dissolution accelerator is kept within 50% in relation to the substance to be dissolved, a transparent solution is obtained.

* Even when sodium phosphite, sodium sulfite or sodium nitrite was used in place of sodium fluoride in the above described experiments, no change was observed in the general tendency of the results.
* Additionally, even when caustic potash was used in place of caustic soda, no change was observed in yield, but the yields were decreased when a lithium salt was used.
* Evaluation of borax as a dissolution accelerator revealed that the maximum addition amount in relation to metal silicon was 270/400= 67.5%, and similar evaluation for sodium fluoride gave 70/400 = 17.5% and that for caustic soda, 100/400 = 25%.
* Borax hardly soluble in water and other dissolution accelerators were dissolved without leaving any residual.

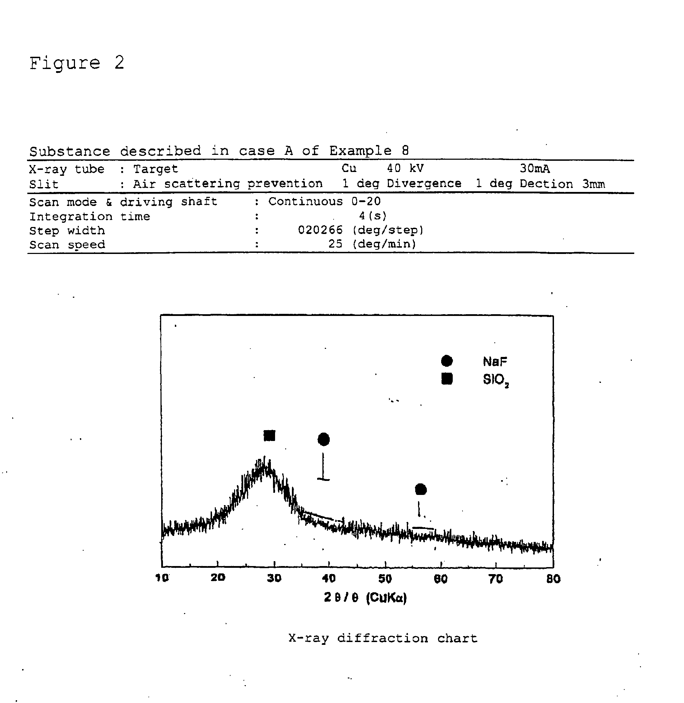

Figure 2 shows the X-ray analysis chart for the product of Case A in Example 8. The chart shows no crystal peaks, indicating that the sample was amorphous. The measurement was made by Shimadzu Techno-Research Inc.

Table 2 shows the pH values, specific gravities and Si: Na ratios for amorphous highly water-soluble inorganic compounds.

**Table 2**

| Element etc. | 1 | 2 | 3 | 4 |
|---|---|---|---|---|
| SiO₂(X) | 60 | 60.5 | 65.2 | 60.2 |
| Na₂O(Y) | 38 | 15.7 | 19.9 | 22 |
| B₂O₃ | | 22.8 | 14.9 | 16.5 |
| NaF | 2 | 1.5 | | 1.3 |
| Specific gravity | 1.5 | 1.28 | 1.35. | 1.45 |
| pH | 12.6 | 10.9 | 10.8 | 12 |
| Molar ratio X/Y | 1.58 | 3.85 | 3.27 | 2.73 |
| A substance with low pH is high in Si/Na ratio. | | | | |

### (Example 9)

The case in which sodium sulfite was used in the preceding Example A is denoted by A-MS, the case in which sodium nitrite was used by A-MO, the case for sodium phosphite by A-MP; to 100 g of industrial denatured ethanol, sulfuric acid (96%), nitric acid (38%), phosphoric acid (86%) and hydrochloric acid (35%) each was added in 1 to 1.5 wt%; and to 30 g of the solution thus obtained, 100 g of A-MS, A-MO or A-MP was added and stirred gently, and the bleeding produced by alcohol dehydration was removed. The yields were in the order of A-MS > A-MO > A-MP, falling within the range from 70 to 82 g. The pH values were 10 to 10.4. In a previous invention, with pH of 11 or lower, compounds were broken down to prohibit embodiment.

The combination of A-hydrochloric acid resulted in the pH 10 and formation of a transparent starch syrup like substance.

### (Example 10)

The high concentration aqueous inorganic compound in the preceding Example having low pH was low in plasticity and became brittle. Heating the compound to 40°C or above to dehydrate the alcohol resulted in the increased viscosity and plasticity, which permitted the formation of sheets of 0.2mm to 2mm in thickness, namely, of any optional thickness. Additionally, heating resulted in molding and solidification.

### (Example 11)

The pH value of the high concentration aqueous inorganic compound of Example 6 was 13; 100 g of the compound was mixed in 30 g of industrial ethanol containing 35% hydrochloric acid in 2 wt%, and then the pH value was 9.6. The bleeding was removed, and the alcohol was removed by warming, yielding a transparent starch syrup like substance.

The alcohols able to be used include products with various boiling points falling in the range from methyl alcohol to glycerin. With ethyleneglycol, a substance of increased viscosity was obtained which was transformed into a product with generated plasticity when heated.

### (Example 12)

The metal in Example 8 was replaced with a 99%pure aluminum wire manufactured by Nikkeikin Co. (Nippon Light Metal Co.). The viscosity was decreased compared to the case where metal silicon was used, but similarly a high concentration aqueous inorganic compound was obtained. As described above, similar treatment with either alcohol or alcohol containing acid yielded a high concentration aqueous inorganic compound that had a satisfactory fluidity and a low pH value. The strength of the hardened substance obtained therefrom by dehydration under heating tended to become lower as compared to that achieved when metal silicon was used.

Products with pH of 11 or lower tended to be easily manufactured.

### (Example 13)

As for the product in Example 6, in the case where the pH was 11.5 or lower, the ratio between the metal component, for example, Si and the alkali component was such that Si:Na >2.5 as an analytical value, and water resistance was generated when hardened under heating at 200°C or above.

### (Example 14)

When the pH values of the high concentration aqueous inorganic compounds of the present invention were 11 or lower, the analytical values thereof were such that Si:Na≧3, as shown in a separate table (Table 2).

### (Example 15)

The method of making the ratio Si:Na be 3 or more can include a method in which addition of a soluble metal component is adopted. When feldspars, diatomites and zeolites are calcined at about 1,000°C and then cooled, these are transformed into soluble silica components. When in addition to these, for example, radiolite (diatomite manufactured by Showa Chemical Industry Co., Ltd.) was added in 10 wt% to the 45% solution with pH 13 of the above described Example 6, the ratio Si:Na became 3 or more; 30 g of the solution was put in a paper cup and heated for 3 minutes in a 500 W microwave oven, and then hardening occurred; water was poured into the cup so as for the hardened substance to submerge in the water, and the cup was allowed to stand for 7 days, revealing that the strength was maintained and water resistance was demonstrated.

Amorphous silica containing substances such as glass, pozzolan and white carbon can also be utilized. Heating at 300°C or above for molding and hardening led to high strength.

### (Example 16)

To the high concentration aqueous inorganic compound of 11.4 in pH and 1.22 in specific gravity of Example 12, a substance containing alumina in 80 or more such as kaoline and bauxite, calcined at 900°C to be transformed into soluble alumina, was added and mixed; then the usable period of time was sufficiently long, and hardening by dehydration occurred when heated at 250°C. To the hardened substance, water was poured as described above and being allowed to stand confirmed water resistance and no deterioration phenomenon.

### (Example 17)

A magnesia cement (5% or above) containing MgO was added to a solid content of the products according to the present invention having the pH value ranging from 4 to 13; then, the cement acted as hardening agent to harden the high concentration aqueous inorganic compounds.

### (Example 18)

The present inventors disclosed, in U.S.A. Patent No. 3,915,724, the mechanism in which the cement strength composition, ettringite, is generated in large quantity by an anhydrite (calcined anhydrous gypsum CaSO₄-F) prepared by calcining gypsum added with CaF₂ in 1 wt%, as follows: the anhydrite accelerates the dissolution rates and dissolution amounts of the hydrate components in cement particularly such as hemihydrate gypsum and dihydrate gypsum at an ambient temperature; the anhydrite accelerates the elution of the alumina component when heated even if the gypsum component is in a condition of supersaturation: and the anhydrite accelerates the reaction between the gypsum component and the alumina component, both increased in solubility to high concentrations. It is well known in the art that cement contains alkali metals and alkaline earth metals as constituents in a few percents by weight; Table 3 shows the chemical components (1) and the strengths (2) generated by normal temperature curing after setting by heating at 70°C for a portland cement (TSC-PC) and an alumina cement (TSC-AC) that are mixed with the above described CaF₂ containing anhydrite. As can be seen from Table 3, the portland cement (TSC-PC) and alumina cement (TSC-AC) according to the present invention are rapid heat cure compositions.

As comparative examples, the chemical components and generated strength for a commonly used portalnd cement are shown in the bottom row of each table.

RO₂ refers to an alkali metal.

**Table 3**

| Chemical components described in the above (1) and characteristics of the cements | | | | | | | | | | | | |
|---|---|---|---|---|---|---|---|---|---|---|---|---|
| Sample | Fineness | | | Components(wt%) | | | | | | | | |
| | Specific gravity | Blaine Value | Residue % on 88µ * Sieve | lgloss | Insol | CaO | SiO₂ | Al₂O₃ | SO₃ | Fe₂O₃ | RO₂ | Total |
| TSC-PC | 3.01 | 4500 | 0.6 | 3.6 | 0.9 | 53.8 | 10.0 | 13.6 | 14.4 | 2.2 | 1.3 | 99.8 |
| TSC-AC | 3.04 | 4200 | 0.4 | 0.1 | .... | 38.4 | 3.7 | 48.7 | 5.8 | 1.4 | 1.8 | 99.9 |
| Portland cement | 3.15 | 3100 | 1 | 0.4 | 0.3 | 64.7 | 21.4 | 5.3 | 2.0 | 3.3 | 1.4 | 98.5 |

| Compressive strength and bending strength described in the above (2) | | | | | | | | | | | |
|---|---|---|---|---|---|---|---|---|---|---|---|
| Sample | JIS Mortar | | Workable Time (min.) | Transverse Strength(kg/cm²) | | | | Compressive Strength(kg/cm²) | | | |
| | S/C | W/C | | 1^{H} | 1^{D} | 7^{D} | 28^{D} | 1^{H} | 1^{D} | 7^{D} | 28^{D} |
| TSC-PC | 2 | 0.65 | 240 | 44 | 63 | 78 | 85 | 149 | 283 | 442 | 460 |
| TSC-AC | 2 | 0.65 | 350 | 55 | 77 | 81 | 90 | 165 | 306 | 409 | 438 |
| Portland cement | 2 | 0.65 | 170 | ...... | 12 | 40 | 65 | ...... | 32 | 210 | 380 |

It is well known in the art that cement contains a few percents by weight of Na₂O as a composition.

Additionally, it has been revealed that the B, Mg, Zn, Cr, Cd and Pb components, in addition to the F component, have some operational effects.

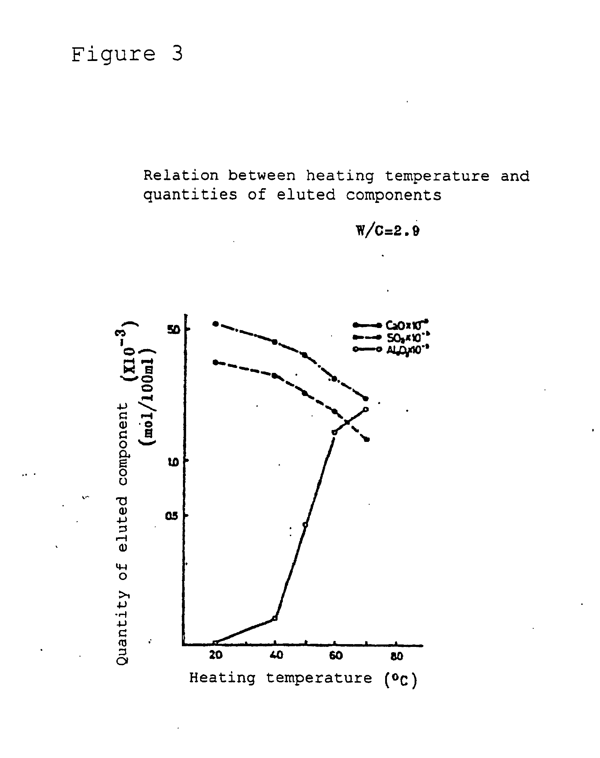

The operational effects revealed in the present invention are shown in Figure 3, which is a graph showing the relations between the heating temperature and the quantities of the eluted components for the above described anhydrite containing a fluoride (calcined anhydrous gympsum CaSO₄-F).

The above described calcined anhydrous gypsum CaSO₄-F displays some special operational effect during heating treatment. The special operational effect is described in U.S.A. Patent No. 3,915,724. Figure 3 is a logarithmic graph collecting the results obtained as follows: an anhydrite containing a fluoride accelerated the dissolution of the hydrate components of a quick heat hardening cement, and the acceleration condition was examined while heating by taking the samples every hour, stopping the reaction using alcohol, and analyzing the components in the samples. There was shown a condition that the fluoride accelerated the elution of the alumina component in the presence of alkaline Ca, in contrast to the accepted theory that at normal temperature, the elution of the Ca and SO₃ components is accelerated to a supersaturation condition, and when heated, gypsum is supersaturated and regulates the elution of the alumina component.

The logarithmic graph shows, as can be seen therefrom, the condition that coexistence of alkali metal and alkaline earth metal with the calcium fluoride described in the present Example accelerates the elution of the alumina component to a high concentration. The main cement component is either CaO • SiO₂ (CaO:1 to 3) or CaO • Al₂O₃ (CaO: 1 to 4), and hence the elution of CaO and Al₂O₃ is naturally accompanied by the elution of the Si component to a high concentration.

### (Example 19)

In 100 g of the strongly alkaline product of 1.46 in specific gravity and 13 in pH of Example 6, 10 g of amorphous silica was mixed, and the mixture was heated in a microwave oven for a rather long period of time. Another mixture of the same composition was heated for 10 minutes in an electric furnace at an elevated temperature of 500°C yielding an inorganic foam. As described above, the ratio Si:Na was 3 or more, and hence the water immersion test revealed no deterioration, and the water resistance was generated. The specific gravities were 0.15 and 0.2.

### (Example 20)

To 100 g of the product B of Example 8, 1 to 15 g of isocyanuric melamine was added, and the mixture thus obtained was heated in a microwave oven for hardening with foaming; the obtained foam was subj ect to the water immersion and water resistance tests. The mixing of 5 g or more generated the water resistance.

### (Example 21)

With 300 g of the strongly alkaline product of 1.46 in specific gravity and 13 in pH used in Example 19, 100 g of ethanol containing 1.5 g of hydrochloric acid was mixed, and the bleeding was removed, yielding 240 g of a transparent solution.

With this solution, 1 to 25 g of cyanuric acid was kneaded, yielding a plastic substance suitable for sheet formation. The kneading in 5 wt%, accompanied by heating with foam at 250°C, generated the water resistance.

### (Example 22)

The plastic substances obtained in Examples 21 and 22 were transformed into either granules or pellets, and air dried, and thus a product was obtained the surface of which was hard but in the interior of which water was retained. The product was placed in a silicon rubber mold and hot-pressed at 300°C, and thus a plate of 0.2 in specific gravity filled in the mold was able to be molded. The pellet was transformed into a foam when heated in a paper cup for 2 to 5 minutes even after being allowed to stand for one month.

Now, description will be made of the noncombustible organoinorganic foam.

It is well known in the art that silanol and siloxane compounds have crystallization water structures more resistant to breakdown at high temperatures than those in cement and gypsum. The amorphous high concentration aqueous inorganic compound of the present invention has a characteristic that the water molecule peaks still remain even at 800°C or above according to the FTIR analyses. The thermal decomposition temperatures of synthetic resins range from 300 to 400°C, and hence synthetic resins do not come to catch fire and be combusted with the decomposition gases thereof if the temperature elevation is suppressed endothermically to the above described range from 300 to 400°C when heated. This is the reason for the use of magnesium hydroxide. The present invention provides a foam film formed thereon as in caramelizing sugar when heated, and the film formation is evidence for polymer formation; as for the molecular weight measurement method for Si compound, although this is not an absolute method, here can be cited the TMS (trimethylsilyl) method developed by DuPont Co., according to which, the molecular weight of the present compound containing Si component was found to be 4,800 in relation to the molecular weight of 140 allotted to liquid glass No. 1. As for the boron B based compounds, no measured molecular weights are available. The presumed structures of these compounds are as follows:

### [Si based amorphous high concentration aqueous compounds]

Alkali metal salts of silanols Si₂[H₆₋ₙ.OHₙ] and siloxane H₃SiOSiH₃. [Boron B based amorphous high concentration aqueous compounds] Boric acid compounds B₂[H₆₋ₙ.OHₙ] • N, N denoting an alkali or alkaline earth metal, and n being 1 to 5. As presumed above, these are amorphous aqueous metal compounds that can be referred to as "ol" compounds. Accordingly, these compounds were able to be mixed with carboxylic acids and "ol" compounds having OH groups. Urethane resin is a convenient resin that can be made through foaming at normal temperature by mere addition of such a curing agent as TDI and DDI to the main material polyol (inclusive of denatured products), and thus displays cushion property. However, urethane evolves biocidal, toxic gases and black smoke when combusted, and accordingly it has been classified as a pollutant resin.

The inorganic hardened substances exhibit no flexibility even though they are foams. Thus, there has been demand for pollution-free and cushioned foams or sheets that are made by combining organic and inorganic materials.

If addition of the dehydrated powder of an amorphous high concentration aqueous inorganic compound of the present invention to urethane resin can yield a composite material in which cushion property is generated in an inorganic substance and an organic substance is transformed into a pollution-free form, both inorganic and organic substance can serve to improve the convenience. The present invention has achieved this.

The cases where Si based materials are used:

| | (a) | (b) | (c) | (d) | (e) |
|---|---|---|---|---|---|
| Polyol | 100 | 100 | 100 | 100 | 100 |
| Si based powder | 70 | 40 | 20 | 60 | 40 |
| Antimony | 5 | 5 | | 5 | 5 |
| Melamine cyanurate | 5 | | 3 | 10 | 10 |
| Special graphite | 5 | | 10 | | |
| Curing agent (TDI,DDI) | 70 | 50 | 60 | 70 | 80 |

* Cushion property was found independent of polyol and foam volume due to the blended curing agent.
* No black smoke was evolved when combusted using a Bunsen burner.
* (a) cleared the USA aviation standard FAA of 60 second combustion.
* (d) and (e) exhibited no dropping and no black smoke evolution even without using graphite.
* In the present experiment, the use of graphite (Nippon Kasei Chemical Co.) did not cause any change in foaming ratio.
* The urethane resin used in the experiment was of a semirigid type available at a DIY shop.

According to the Building Standard Law of the Ministry of Construction of Japan, heat insulating materials used for fireproof construction are required to be noncombustible matters; hitherto, the standard was not able to be satisfied without using graphite. And they evolved black smoke and toxic gases.
The present inventors have obtained the results that the use of the boron B based amorphous highly water-soluble compounds of the present invention permits manufacturing white materials which have foam volumes larger than that obtained with urethane resin alone and the addition of the above described substance as additive to urethane resin does not cause cost increase. The use of urethane leads to formation of soft and flexible foams which do not evolve black smoke when combusted.

To 100 parts of urethane main material of polyol, 100 to 500 parts by weight were added, but no flow value was generated, yielding no practicability.
In order to overcome this problem, there was used a B based compound (abbreviated as PHN) of the present invention that is a product containing solid content to a high concentration of 40% or above. For sake of accuracy, water was added to a boron B based product heated at 200°C .

| | (a) | (b) | (c) | (d) | (e) | (f) |
|---|---|---|---|---|---|---|
| Polyol | 100 | 100 | 100 | 100 | 100 | 100 |
| PHN | 150 | 200 | 300 | 400 | 500 | 600 |
| Water | 30 | 100 | 150 | 200 | 250 | 400 |
| DDI | 100 | 55 | 100 | 100 | 100 | 120 |
| Foam volume | 350 | 300 | 380 | 400 | 430 | 450 |

* oil burner test revealed no black smoke evolution, no dropping, and no afterflame in any case.
* In any case, combustion at 750°C for 20 minutes in an electric furnace left 50 to 70% of solid component and showed the results close to those for noncombustible matter.
* No fire retardant was added.
* Flowability was satisfactory so that application to two-liquid discharge device is possible.
* Curing for drying and removing moisture was needed after foaming.
* Degree of hardness was increased after curing.

The results show that a noncombustible foam is obtained though foaming at an ambient temperature, thereby employing it as a noncombustible, heat insulating material suitable for a fire-resistant panel.

### Industrial Applicability

For the purpose of obtaining inorganic polymers capable of replacing organic polymers, the present invention has been able to develop amorphous highly water-soluble inorganic compounds that are transformed to be pollution-free when combusted and disposed of, by making natural and synthetic metals and inorganic substances soluble in water in high concentrations. It has been found that an inorganic dissolution accelerator, which forms a composite by combining alkaline metals and alkaline earth metals, and one or more types compounds selected from fluorides, boric acid, borax, mineral acids and mineral "ous" acids and salts thereof, has the action to dissolve natural and synthetic metals and inorganic substances in the aqueous solution so as to be transformed into amorphous highly water-soluble inorganic compounds, and accordingly to transform into compounds. Consequently, inorganic polymers are formed and lead to the action effect that the polymers, when heated, are dehydrated, boiled with foam, made to form film, softened and plasticized, hardened and molded with formed film. The inorganic foams become noncombustible and durable heat insulating materials, return to soil when dumped after pulverization, so that the inorganic foams are free from pollution, can achieve energy saving and resource saving, and can replace urethane and polystyrene foam that cause combustion pollution and disposal pollution.

## Claims

1. An inorganic dissolution accelerator is **characterized in that** said accelerator is prepared by making one or more compounds selected from fluorides, mineral acids, mineral "ous" acids and salts thereof, and boric acid compounds, all either natural or synthetic, coexist with an alkali metal and/or a substance containing an alkaline metal, so that said inorganic dissolution accelerator is capable of transforming metal (s) and inorganic substance (s) present in water, either natural or synthetic, containing as the main component silicon Si, aluminum Al, and/or boron B, into amorphous highly water- soluble inorganic compounds having a high concentration equal to, or larger than the solubility well known in the art.

2. The amorphous highly water-soluble inorganic compounds according to claim 1, **characterized in that** said inorganic compounds are synthesized by using the dissolution accelerator of claim 1, and are warming at 40°C or above for dissolution acceleration so that the metal (s) and inorganic substances(s) in the preceding claim, either natural or synthetic, have a concentration equal to, or larger than the solubility well known in the art.

3. The amorphous highly water-soluble inorganic compounds according to claim 1 or 2, transformable into a water-resistant hardened substance when heated, **characterized in that** the highly water-soluble inorganic compounds of claim 1 or 2, with a pH value of 12 or above, are mixed with an alcohol containing an added mineral acid, then the water and the alcohol are removed, the pH is lowered to be 11.5 or less, and either the solid content is adjusted at a high concentration of 50% or higher or cyanuric acid or melamine isocyanurate is added.

4. The amorphous highly water-soluble inorganic compounds according to any one of claims 1 to 3, **characterized in that** the amorphous highly water-soluble inorganic compounds of any one of claims 1 to 3, in which the main metallic component is Si and/or Al, is adjusted so as to have the metallic components 2.5 times or more higher in molar ratio than the alkali metal component by further adding an amorphous component containing a metal (s), and the resultant inorganic compounds are transformable to a water-resistant hardened substance when heated.

5. A solvent-free inorganic foam according to any one of claims 2 to 4, **characterized in that** the inorganic foam is produced in a process comprising steps of: exposing the amorphous highly water-soluble inorganic compound of claims 2 to 4 to an arbitrary temperature between 100°C and 900°C for heating said inorganic compound for a certain period of time, to dehydrate said inorganic compound by evaporation resulting in boiling with foam, and thus transform said inorganic compound into a plasticized film-forming substance, and further transforming said substance into a film having a pressure resistance strength during evaporation.

6. An inorganic molded precursor according to claim 5, **characterized in that** said precursor is made sheet like or granular by air drying or heating the amorphous highly water-soluble inorganic compound of claim 5 so as to lower the water content to less than 30%, and when heated said precursor can be boiled with foam to form a plasticized film as a solvent-free inorganic foam.

7. The amorphous highly water-soluble inorganic compounds according to any one of claims 1 to 3, **characterized in that** said inorganic compounds are produced by adjusting the pH of said highly water-soluble inorganic compound to an arbitrary value of from 4 to 9, wherein the dissolution accelerator of any one of claims 1 to 3 is added and the main metallic component is a boron B compound.

8. A rapid heat cure composition, **characterized in that** said composition is produced by adding the inorganic dissolution accelerator of claim 1 to portland cement or alumina cement.

9. A powder of the amorphous highly water-soluble inorganic compound of claim 1 or 2, produced by heating said inorganic compound to 300°C or above and dehydrated by heating by means of spraying through a nozzle heated so as to maintain said nozzle from 150 to 300°C or produced by heating said amorphous highly water-soluble inorganic compounds to 150 to 300°C and thereby dehydrating said inorganic compounds, followed by pulverizing said inorganic compounds.

10. A fire-retardant organic/inorganic composite foam and a production method thereof, **characterized in that** the foam is produced by adding 20 wt% or more of the amorphous highly water-soluble inorganic compound of claims 1 and 2 to a polyol compound as the main component of urethane, together with a deoxidizing fire retardant, and further by adding a curing agent to be highly foamed and cushiony.

11. A fire-retardant organic/inorganic composite foam and a production method thereof, which foam is produced by adding, in 100 wt% or more relative to the sum amount of the main urethane component and the curing agent, the powder of the amorphous highly water-soluble inorganic compounds of claim 1 or 2, containing the boron B component as the main component and water, or said highly water-soluble inorganic compound containing the 40% or more solid content, and which foam is equal to or larger in foam volume than the used urethane component.
